# EUROPÄISCHE PATENTANMELDUNG

(11) **EP 4 353 982 A1**
(43) Veröffentlichungstag der Anmeldung: **17.04.2024**
(21) Anmeldenummer: 22200931.8
(22) Anmeldetag: 11.10.2022
(51) Int. Cl.: F16C 33/12, F16C 33/14, F16C 33/20

(54) **GLEITLAGERELEMENT**

(71) Anmelder: Miba Gleitlager Austria GmbH, 4663 Laakirchen (AT)
(72) Erfinder: EBERHARD, Alexander, 4692 Niederthalheim (AT); SCHINAGL, Matthias, 4020 Linz (AT)
(74) Vertreter: Burger, Hannes

(57) **Zusammenfassung**

Die Erfindung betrifft ein Gleitlagerelement (1) umfassend einen mehrschichtigen Lagerelementkörper (2), der eine Stützschicht (3) und zumindest eine weitere Schicht (4) aufweist, wobei die Stützschicht (3) eine Schichtdicke (9), eine erste Oberfläche (10) und eine zweite Oberfläche (11), die der ersten Oberfläche (10) in Richtung der Schichtdicke (9) der Stützschicht (3) gegenüberliegt, aufweist und die weitere Schicht (4) entweder auf der ersten Oberfläche (10) oder auf der zweiten Oberfläche (11) angeordnet ist, und wobei in der Stützschicht (3) ein Härtegradient mit in Richtung auf die weitere Schicht (4) abnehmender Härte ausgebildet ist.

## Beschreibung

Die Erfindung betrifft ein Gleitlagerelement umfassend einen mehrschichtigen Lagerelementkörper, der eine Stützschicht und zumindest eine weitere Schicht aufweist, wobei die Stützschicht eine Schichtdicke, eine erste Oberfläche und eine zweite Oberfläche, die der ersten Oberfläche in Richtung der Schichtdicke der Stützschicht gegenüberliegt, aufweist und die weitere Schicht entweder auf der ersten Oberfläche oder auf der zweiten Oberfläche angeordnet ist.

Weiter betrifft die Erfindung ein Verfahren zur Herstellung eines Gleitlagerelements umfassend einen mehrschichtigen Lagerelementkörper, der aus einer Stützschicht und zumindest einer weiteren Schicht hergestellt wird, wobei die Stützschicht eine Schichtdicke, eine erste Oberfläche und eine zweite Oberfläche, die der ersten Oberfläche in Richtung einer Schichtdicke der Stützschicht gegenüberliegt, aufweist und die weitere Schicht entweder auf der ersten Oberfläche oder auf der zweiten Oberfläche angeordnet wird.

An moderne Gleitlagerungen werden sehr hohe Anforderungen bezüglich thermo-mechanische Belastbarkeit, Zuverlässigkeit und Gleiteigenschaften gestellt. Generell bewährt haben sich dabei Schichtverbunde, meist mit dem Aufbau Stahlrücken-Lagermetallschicht-Laufschicht, gegebenenfalls unter Anordnung von Zwischenschichten, wie z.B. Diffusionssperren, Bindefolien, etc., da häufig gegenläufige Eigenschaften gefordert sind, und diese mit Einschichtgleitlagern nur, falls überhaupt, durch Kompromisse mehr oder weniger zutreffend erfüllt werden können. Die Eigenschaften der einzelnen Schicht richtet sich somit nach der jeweils gewünschten Funktion.

Der vorliegenden Erfindung liegt die Aufgabe zu Grunde, die Standzeit eines Gleitlagerelements zu verbessern.

Die Aufgabe der Erfindung wird bei dem eingangs genannten Gleitlagerelement dadurch gelöst, dass in der Stützschicht ein Härtegradient mit in Richtung auf die weitere Schicht abnehmender Härte ausgebildet ist.

Weiter wird die Aufgabe der Erfindung mit dem eingangs genannten Verfahren gelöst, nach dem vorgesehen ist, dass in der Stützschicht ein Härtegradient mit in Richtung auf die weitere Schicht abnehmender Härte ausgebildet wird.

Von Vorteil ist dabei, dass die aufgrund der Erweichung der Stützschicht im Zuge der Verbundherstellung mit der weiteren Schicht hervorgerufenen Änderung der mechanischen Eigenschaften reduziert werden können. Trotzdem bleibt die Stützschicht an der anderen Oberfläche, die beispielsweise an einer Lageraufnahme anliegt, mit einer entsprechenden Härte erhalten, beispielsweise zur Ausbildung eines Presssitzes. Durch die Verringerung der Härte in der Verbindungszone zur weiteren Schicht können mechanische Spannungen zwischen den Schichten besser vermieden werden, womit die Ermüdungsgrenze und dementsprechend die Lebensdauer des Gleitlagerelementes erhöht werden können.

Zur weiteren Verbesserungen dieser Effekte kann gemäß einer Ausführungsvariante der Erfindung vorgesehen sein, dass der Minimalwert der Härte der Stützschicht um zumindest 25 % des Maximalwertes der Härte der Stützschicht kleiner ist.

Ebenfalls zur Verbesserung der voranstehend genannten Effekte kann nach einer anderen Ausführungsvariante der Erfindung vorgesehen sein, dass die Härte der Stützschicht an der Oberfläche, an der die weitere Schicht angeordnet ist, um maximal 400 % höher ist, als eine Härte der weiteren Schicht, die die weitere Schicht an der Oberfläche aufweist, die der Stützschicht zugewandt ist.

Nach einer bevorzugten Ausführungsvariante der Erfindung kann vorgesehen sein, dass die Stützschicht aus einem Stahl besteht. Insbesondere mit Stahl können die gewünschten Effekte bereits bei relativ dünnen Schichtdicken bereitgestellt werden, womit Konstruktionsänderungen an der jeweiligen Gleitlagerung an sich, in der das Gleitlagerelement verbaut ist, vermieden werden können.

Bevorzugt kann dabei nach einer weiteren Ausführungsvariante der Erfindung vorgesehen sein, dass die Stützschicht einschichtig ausgebildet ist, womit die Herstellung des Gleitlagerelementes trotz des Härtegradienten einfacher durchgeführt werden kann.

Andererseits kann aber nach einer anderen Ausführungsvariante der Erfindung auch vorgesehen werden, dass die Stützschicht mehrere Teilschichten aufweist, wobei innerhalb der Teilschichten die Härte gleichbleibend ist. Mit dieser Ausführungsvariante sind einerseits Abstufungen der Härte in der Stützschicht einfacher darstellbar, als in einer einschichtigen Stützschicht. Andererseits kann damit auch ein Verlauf des Härtegradienten bereitgestellt werden, der mit einer einschichtigen Ausführungsvariante nicht oder nur mit deutlichem Mehraufwand darstellbar ist. Beispielsweise kann an der ersten Oberfläche ein großer Härteabfall erzeugt werden, der dann in einen "schleichenden" Härteabfall in Richtung auf die Bindezone zur weiteren Schicht übergeht.

Zur Verbesserung der Haftfestigkeit der einzelnen Teilschichten aneinander kann gemäß einer weiteren Ausführungsvariante der Erfindung vorgesehen sein, dass mehrere oder alle Teilschichten aus metallischen Legierungen mit jeweils dem gleichen Basiselement bestehen. Insbesondere kann dabei nach einer Ausführungsvariante der Erfindung vorgesehen sein, dass mehrere oder alle Teilschichten aus einem Stahl bestehen.

Zur deutlicheren bzw. einfacheren Ausbildung des Härtegradienten kann entsprechend einer Ausführungsvariante der Erfindung vorgesehen sein, dass die Stützschicht ein härtendes Element aufweist, für das innerhalb der Stützschicht zwischen der ersten und der zweiten Oberfläche ein Konzentrationsgradient ausgebildet ist, wobei gemäß einer Ausführungsvariante dazu vorgesehen sein kann, dass das härtende Element ausgewählt ist aus einer Gruppe umfassend Kohlenstoff, Stickstoff, Molybdän, Wolfram, Chrom, Nickel, Phosphor, oder eine Kombination daraus. Gemäß einer Ausführungsvariante des Verfahrens kann dafür vorgesehen sein, dass die Stützschicht an der Oberfläche, die der Oberfläche gegenüberliegt, auf der die weitere Schicht angeordnet wird, karburiert oder nitriert oder karbonitriert wird.

Für die einfache Herstellung des Härtegradienten in der Stützschicht kann gemäß einer Ausführungsvariante des Verfahrens vorgesehen sein, dass die Stützschicht an der Oberfläche, an der die weitere Schicht angeordnet wird, erwärmt wird, um damit Eigenspannungen im Gefüge der Stützschicht abzubauen bzw. eine Rekristallisation zur ermöglichen.

Dabei kann nach einer Ausführungsvariante des Verfahrens dazu vorgesehen sein, dass die Erwärmung der Stützschicht induktiv durchgeführt wird. Mit der induktiven Erwärmung können Bereiche oder Zonen der Stützschicht sehr selektiv erhitzt bzw. erwärmt werden, womit der Härtegradient in der Stützschicht einfacher ausbildbar ist.

Von Vorteil ist entsprechend einer weiteren Ausführungsvariante des Verfahrens auch, wenn die Oberfläche der Stützschicht, die der Oberfläche gegenüberliegt, auf der die weitere Schicht angeordnet wird, gekühlt wird. Das Verfahren ist damit in Hinblick auf die Ausbildung des Härtegradienten einfacher durchführbar, da ein unerwünschter Härteabbau an der nicht mit der weiteren Schicht zu versehenden "Rückseite" des Gleitlagerelements vermieden werden kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Mehrschichtgleitlagerelement in Seitenansicht;
- Fig. 2: eine Ausführungsvariante eines Härtegradienten;
- Fig. 3: einen Ausschnitt aus einer Ausführungsvariante einer Stützschicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

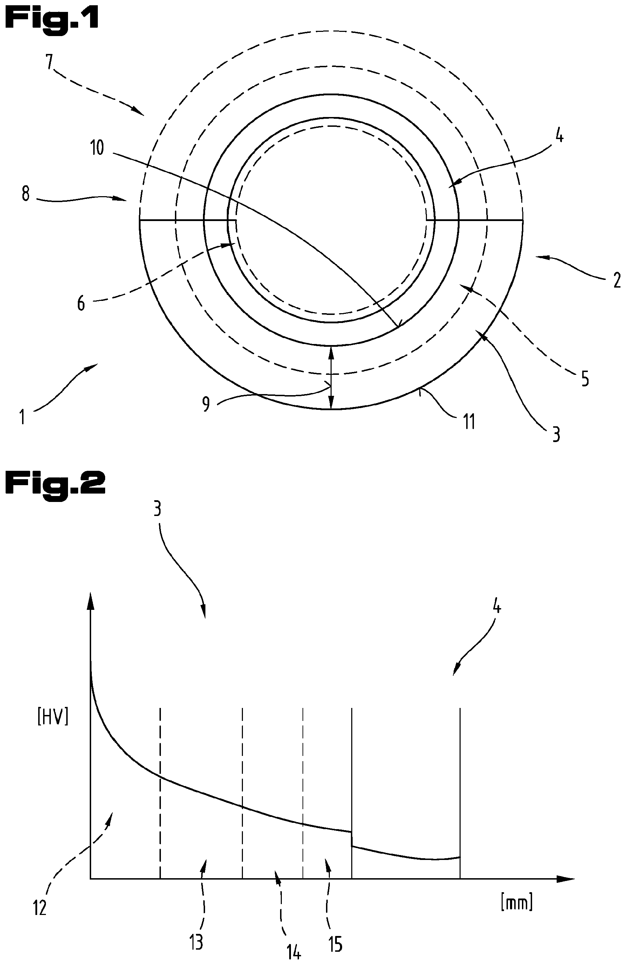

In Fig. 1 ist ein Gleitlagerelement 1, insbesondere ein Radialgleitlagerelement, aus einem Verbundwerkstoff in Seitenansicht dargestellt.

Das Gleitlagerelement 1 ist insbesondere zur Verwendung in einem Verbrennungsmotor oder zur Lagerung einer Welle vorgesehen. Es kann aber auch für andere Anwendungen eingesetzt werden, beispielsweise in Windkraftanlagen, insbesondere Windkraftanlagengetrieben, als Industriegleitlager in Kompressoren, Dampf- und Gasturbinen, oder als Teil eines Gleitlagers für ein Schienenfahrzeug, etc.

Das Gleitlagerelement 1 weist einen mehrschichtigen Lagerelementkörper 2 auf. Der Lagerelementkörper 2 umfasst eine metallische Stützschicht 3 und eine darauf angeordnete weitere Schicht 4 bzw. besteht aus der metallischen Stützschicht 3 und der damit verbundenen weiteren Schicht 4. In der bevorzugten Ausführungsvariante des Gleitlagerelements 1 ist auch die weitere Schicht 4 eine metallische Schicht.

Wie aus Fig. 1 strichliert angedeutet zu ersehen ist, kann der Lagerelementkörper 2 auch eine oder mehrere zusätzliche Schichte(n) aufweisen, beispielsweise eine Lagermetallschicht 5, und/oder eine Einlaufschicht 6. Zwischen zumindest zwei der Schichten des Gleitlagerelementes 1 kann/können auch zumindest eine Diffusionssperrschicht und/oder zumindest eine Bindeschicht angeordnet sein.

Je nach Ausbildung des Gleitlagerelementes 1 kann die weitere Schicht 4 also beispielsweise die Lagermetallschicht 5 oder eine Gleitschicht oder eine der genannten Zwischenschichten sein, da die weitere Schicht 4 direkt auf der Stützschicht 3 angeordnet und mit dieser verbunden ist. In der einfachsten Ausführungsvariante kann das Gleitlagerelement 1 also beispielsweise ein Zweischichtlager sein, bestehend aus der Stützschicht 3 und der als Gleitschicht ausgebildeten weiteren Schicht 4.

Da der prinzipielle Aufbau derartiger Gleitlagerelemente 1 aus dem Stand der Technik bekannt ist, sei bezüglich Einzelheiten des Schichtaufbaus auf die einschlägige Literatur dazu verwiesen.

Ebenso sind die verwendeten Werkstoffe, aus denen die Lagermetallschicht 5, die Gleitschicht, die Einlaufschicht 6, die zumindest eine Diffusionssperrschicht und die zumindest eine Bindeschicht bestehen können, aus dem Stand der Technik bekannt, und sei daher bezüglich dieser auf die einschlägige Literatur verwiesen. Beispielhaft sei angeführt, dass die Lagermetallschicht 5 und/oder die Gleitschicht aus einer Kupferbasislegierung oder einer Aluminiumbasislegierung oder einer Zinnbasislegierung, die Einlaufschicht aus Zinn, Blei, oder Bismut oder aus einem, zumindest einen Zusatzstoff enthaltenden, synthetischen Polymer oder einer PVD-Beschichtung, die Diffusionssperrschicht z.B. aus Kupfer oder Nickel, gebildet sein können. Auch die Gleitschicht kann als eine polymerbasierte Schicht ausgebildet sein.

Es sei in diesem Zusammenhang erwähnt, dass Metallbasislegierungen Legierungen sind, in denen das jeweilige Basismetall im Vergleich zu den weiteren Metallen der Legierung den höchsten mengenmäßigen oder volumenmäßigen Anteil an der Legierung aufweist.

Das halbschalenförmige Gleitlagerelement 1 bildet zusammen mit zumindest einem weiteren Gleitlagerelement 7 - je nach konstruktivem Aufbau kann auch mehr als ein weiteres Gleitlagerelement 7 vorhanden sein - ein Gleitlager 8 aus.

Es ist weiter möglich, dass das Gleitlagerelement 1 als Gleitlagerbuchse ausgebildet ist, wie dies in Fig. 1 strichliert angedeutet ist. In diesem Fall ist das Gleitlagerelement 1 gleichzeitig das Gleitlager 8.

Weiter kann das Gleitlagerelement 1 bzw. das Gleitlager 8 auch in Form einer Anlaufscheibe, eines Bundlagers, etc., ausgebildet sein.

Im Falle eines Radialgleitlagers kann je nach Anordnung bzw. Ausbildung des Gleitlagers 8 die weitere Schicht 4 in radialer Richtung betrachtet innen (wie in Fig. 1 dargestellt) oder außen angeordnet sein. Bei letzterer Ausführung wird das Gleitlagerelement 1 z.B. auf einer Welle oder Achse angeordnet und mit dieser verbunden, sodass die Stützschicht 3 an der Welle oder Achse anliegt.

Die Stützschicht 3 weist eine Schichtdicke 9 auf. Die Schichtdicke 9 ist dabei in Richtung auf die weitere Schicht 4 definiert, also in radialer Richtung bei einem Radialgleitlager oder in axialer Richtung bei einem Axialgleitlager. Die Schichtdicke 9 kann beispielsweise zwischen 1 mm und 25 mm, insbesondere zwischen 2,5 mm und 20 mm, betragen.

Weiter weist die Stützschicht 3 eine erste Oberfläche 10 und eine zweite Oberfläche 11, die der ersten Oberfläche 10 in Richtung der Schichtdicke 9 gegenüberliegt, auf. Die weitere Schicht 4 ist dabei je nach Ausführungsvariante des Gleitlagerelements 1 auf der ersten Oberfläche 10 angeordnet und mit dieser verbunden (z.B. Fig. 1) oder auf der zweiten Oberfläche 11 angeordnet und mit dieser verbunden.

Bei der in Fig. 1 dargestellten Ausführungsvariante des Gleitlagerelements 1 bildet die zweite Oberfläche 11 zumindest einen Teil der äußeren Mantelfläche des Gleitlagers 8.

Es ist vorgesehen, dass in der Stützschicht 3 ein Härtegradient mit in Richtung auf die weitere Schicht 4 abnehmender Härte ausgebildet ist. Ein Beispiel dieses Härtegradienten für ein Gleitlagerelement 1 bestehend aus der Stützschicht 3 und der weiteren Schicht 4, die auf der ersten Oberfläche 10 angeordnet ist, ist in Fig. 2 dargestellt. Dabei ist auf der Abszisse der Abstand von der zweiten Oberfläche 11 der Stützschicht in [mm] und auf der Ordinate die Härte nach Vickers HV 1 gemäß DIN EN ISO 6507-1:2018 aufgetragen.

Wie aus der Darstellung in Fig. 2 ersichtlich ist, ist die Härte der Stützschicht 3 an der zweiten Oberfläche 11, die im vorliegenden Beispiel die Rückseite des Gleitlagerelements 1 ist und an einer Lageraufnahme anliegt, am höchsten. Mit zunehmendem Abstand von dieser zweiten Oberfläche 11 nimmt auch die Härte ab, wobei im dargestellten Beispiel der Härteabfall in einer an die zweite Oberfläche 11 anschließenden Randzone 12 am größten ist bzw. größer als in daran anschließenden Zwischenzonen 13, 14 und in einer Bindezone 15. Die Bindezone 15 ist dabei jene Zone der Stützschicht 3, die unmittelbar an der weiteren Schicht 4 anliegt und die an der Verbindung mit der weiteren Schicht 4 unmittelbar beteiligt ist. Die Verbindung der Stützschicht 3 mit der weiteren Schicht 4 kann beispielsweise eine metallurgischen Verbindung sein, die durch Aufgießen der weiteren Schicht 4 auf die Stützschicht 3 erzielt wird, oder eine durch (Walz-)Plattieren erzeugte Bindung. Die weitere Schicht 4 kann auch mit anderen Methoden auf die Stützschicht 3 aufgebracht sein, wie beispielsweise Direktbeschichtungsverfahren, CMT (Cold Metal Transfer), Laser Cladding, etc.

Die Randzone 12 kann beispielsweis eine Schichtdicke zwischen 1 mm und 24 mm aufweisen. Die Bindezone 15 kann beispielsweis eine Schichtdicke zwischen 0,2 mm und 3 mm aufweisen. Die Gesamtschichtdicke der Zwischenzonen 13, 14 ergibt sich somit aus der Schichtdicke 9 der Stützschicht 3 abzüglich der Schichtdicken der Randzone 12 und der Bindezone 15. Es können eine oder mehrere, beispielsweise zwei, drei, vier, etc. Zwischenzonen 13, 14 ausgebildet sein, wobei sich die mehreren Zwischenzonen 13, 14 durch die Abnahme der Härte pro Zonendicke (bei gleichbleibender Zonendicke) unterscheiden.

Es sei an dieser Stelle erwähnt, dass der Härteverlauf in Fig. 2 als ein Ausführungsbeispiel verstanden werden soll. Der Härteverlauf kann auch anders gestaltet sein, beispielsweise kann in der Randzone 12 kein oder nur ein geringer Härteabfall ausgebildet sein, wie dies nachstehend noch ausgeführt wird. Über die gesamte Schichtdicke 9 der Stützschicht 3 ist aber jedenfalls ein Härteabfall bzw. ein Härtegradient in Richtung auf die weitere Schicht 4 ausgebildet, wie dies bereits voranstehend ausgeführt wurde.

Die Abnahme der Härte der Stützschicht 3 von der zweiten Oberfläche 11 in Richtung auf die erste Oberfläche 10 kann - wie dargestellt - einem exponentiellem Verlauf folgen. Die Verlauf der Härteabnahme kann aber auch einer anderen Funktion folgen, beispielsweise einer linearen (gegebenenfalls mit einem anfänglichem Härtesprung), einer logarithmischen, etc.

Der Härteabfall in der Randzone 12 kann zwischen 0 % und 50 %, insbesondere zwischen 0 % und 20 %, betragen. Der Härteabfall in der Bindezone 15 kann zwischen 2 % und 50 %, insbesondere zwischen 5 % und 30 %, betragen. In der oder in den Zwischenzone(n) 13, 14 - falls vorhanden - kann der Härteabfall in Summe zwischen 0 % und 20 % betragen. Die Abnahme der Härte ist jeweils auf die Maximalhärte der Stützschicht 3 bezogen.

Gemäß einer Ausführungsvariante des Gleitlagerelements 1 kann der Minimalwert der Härte der Stützschicht 3 um zumindest 25 %, insbesondere zumindest 30 %, des Maximalwertes der Härte der Stützschicht 3 kleiner sein. Im vorliegenden Beispiel nach Fig. 2 ist der Maximalwert der Härte an der zweiten Oberfläche 11 vorhanden. Wie im Nachfolgenden aber noch ausgeführt wird, kann der Maximalwert der Härte der Stützschicht 3 auch beabstandet von der zweiten Oberfläche 11 ausgebildet sein, wobei aber auch in diesem Fall der Maximalwert der Härte vorzugsweise im Bereich der ersten Hälfte, insbesondere im Bereich des ersten Drittels, der Schichtdicke 9 der Stützschicht 3, ausgehend von der zweiten Oberfläche 11 bzw. der Oberfläche der Stützschicht 3, an der die weitere Schicht 4 nicht angeordnet ist, ausgebildet ist.

Der Minimalwert der Härte ist vorzugsweise an der ersten Oberfläche 10 vorhanden. Der Minimalwert der Härte kann aber auch beabstandet zur ersten Oberfläche 10 der Stützschicht 3 ausgebildet sein, wobei in diesem Fall der Minimalwert der Härte vorzugsweise im Bereich der ersten Hälfte, insbesondere im Bereich des ersten Drittels, der Schichtdicke 9 der Stützschicht 3, ausgehend von der ersten Oberfläche 10 bzw. der Oberfläche der Stützschicht 3, an der die weitere Schicht 4 angeordnet ist, ausgebildet ist.

Der Maximalwert der Härte der Stützschicht 3 kann beispielsweise 210 HB betragen. Im Bereich der Bindezone 15 kann die Härte der Stützschicht beispielsweise 110 HB betragen.

Generell kann gemäß einer Ausführungsvariante die Härte der Stützschicht 3 einen Maximalwert zwischen 180 HV 1 und 250 HV 1 aufweisen. Die Bindezone 15 kann dabei generell eine Härte aufweisen, die um zwischen 30 HV 1 und 125 HV 1 kleiner ist, als der Maximalwert der Stützschicht 3.

Wie aus Fig. 2 zu ersehen ist, ist die Härte der weiteren Schicht 4 in der (unmittelbar) an die erste Oberfläche 10 anschließenden Randzone kleiner, also jene der Stützschicht 3 in der Bindezone. Dabei kann gemäß einer weiteren Ausführungsvariante des Gleitlagerelements 1 vorgesehen sein, dass die Härte der Stützschicht 3 an der Oberfläche (im vorliegendem Beispiel die erste Oberfläche 10), an der die weitere Schicht 4 angeordnet ist, um maximal 400 %, insbesondere maximal 300 %, höher ist, als eine Härte der weiteren Schicht 4, die die weitere Schicht 4 an der Oberfläche aufweist, die der Stützschicht 3 zugewandt ist bzw. mit der sie an der Stützschicht 3 anliegt bzw. über die sie mit der Stützschicht 3 verbunden ist. Die Stützschicht 3 kann an der Oberfläche der Anlage der weiteren Schicht 4 eine Härte aufweisen, die um mindestens 50 %, insbesondere mindestens 100 %, höher ist, als die Härte der weiteren Schicht 4, die die weitere Schicht 4 an der Oberfläche aufweist, die der Stützschicht 3 zugewandt ist bzw. mit der sie an der Stützschicht 3 anliegt bzw. über die sie mit der Stützschicht 3 verbunden ist.

Beispielsweise kann die Stützschicht 3 für eine Kombination von Stahl als Stützschicht 3 und eine Aluminiumbasislegierung als weitere Schicht 4 an der Oberfläche eine Härte aufweisen, die 400 % höher ist, als die Härte der weiteren Schicht 4 an deren Oberfläche, mit der sie an der Stützschicht 3 anliegt. Für eine Kombination Stahl-Stützsicht 3 mit einer Bronze als weitere Schicht 4 kann die Härte um 250 % höher sein.

Alternativ dazu besteht die Möglichkeit, dass die Härte der weiteren Schicht 4 an der Oberfläche, die der Stützschicht 3 zugewandt ist bzw. mit der sie an der Stützschicht 3 anliegt bzw. über die sie mit der Stützschicht 3 verbunden ist, gleich groß oder größer ist als jene der Stützschicht 3 in der Bindezone 15. Insbesondere ist jedoch auch bei dieser Ausführungsvariante der Härtesprung von Stützschicht 3 auf weitere Schicht 4 nicht größer als maximal 10 % des Minimalwertes (wie voranstehend definiert) der Härte der Stützschicht 3.

Prinzipiell kann die Stützschicht 3 aus jedem geeigneten Werkstoff bestehen, der dem Gleitlagerelement 1 die erforderliche Strukturfestigkeit verleiht. Beispielsweis kann die Stützschicht 3 aus einer Kupferbasislegierung, wie z.B. Bronze, Messing, oder auch aus einer Aluminiumbasislegierungen, bestehen. In der bevorzugten Ausführungsvariante besteht die Stützschicht 3 jedoch aus einem Stahl. Beispiele für Stähle sind SAE 1010, SAE1015, SAE 1020, DC04, C10, C15K, DD14, etc.

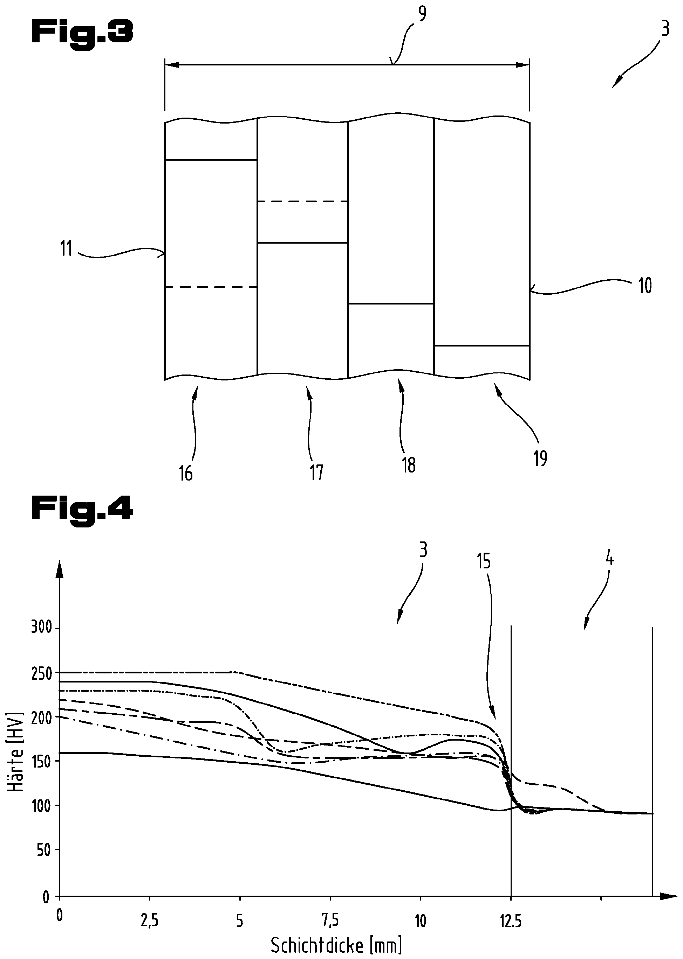

Bei der Ausführungsvariante des Gleitlagerelementes 1 nach Fig. 2 ist die Stützschicht 3 einschichtig ausgebildet. Dies ist die bevorzugte Ausführungsvariante des Gleitlagerelementes 1. Es kann aber gemäß einer weiteren Ausführungsvariante des Gleitlagerelementes 1 auch vorgesehen sein, dass die Stützschicht 3 mehrere Teilschichten 16 bis 19 aufweist, wie dies in Fig. 3 schematisch dargestellt ist. Dabei ist bevorzugt vorgesehen, dass innerhalb der Teilschichten 16 bis 19 die Härte gleichbleibend ist, wie dies in Fig. 3 anhand der waagrechten Linien angedeutet ist. Herstellungsbedingt übliche Schwankungen bzw. Toleranzen bzgl. des Härtewertes innerhalb einer Teilschicht 16 bis 19 sind dabei zulässig. Es kann aber auch vorgesehen sein, dass in einer oder mehreren oder allen der Teilschichten 16 bis 19 ein Härtegradient ausgebildet ist.

In Fig. 3 ist die Stützschicht 3 durch vier Teilschichten 16 bis 19 gebildet. Es können auch weniger oder mehr als vier Teilschichten 16 bis 19 vorhanden sein, beispielsweise nur zwei, oder drei, oder fünf, oder sechs, etc.

Alle Teilschichten 16 bis 19 können die gleiche Schichtdicke aufweisen, die sich durch entsprechende Aufteilung der Schichtdicke 9 der Stützschicht 3 ergibt. Alternativ können einzelne Teilschichten 16 bis 19 auch dünner ausgebildet sein, beispielsweise die die erste Oberfläche 10 und/oder die die zweite Oberfläche 11 bildende Teilschicht 19 bzw. 16.

Die Teilschichten 16 bis 19 sind miteinander verbunden, beispielsweise durch Plattieren, insbesondere durch Walzplattieren. Es sind auch andere Methoden und Verfahren einsetzbar, wie beispielswiese Gießplattieren, Direktbeschichtung, etc.

Bevorzugt bestehen mehrere oder alle Teilschichten 16 bis 19 aus metallischen Legierungen mit jeweils dem gleichen Basiselement, insbesondere aus einem Stahl (mit Eisen als Basiselement). Die Stahlzusammensetzung und/oder die Gefügestruktur der Stähle kann dabei in den einzelnen Teilschichten 16 bis 19 unterschiedlich sein. Beispielsweise kann eine der Teilschicht 16 bis 19 der Stützschicht 3 eine Entkohlungszone aufweisen bzw. entkohlt sein, insbesondere jene der Teilschichten 16 bis 19, an der die weitere Schicht 4 anliegt bzw. mit der sie verbunden ist.

Wie anhand der strichlierten Linien in Fig. 3 dargestellt ist, besteht dabei auch die Möglichkeit, dass der Maximalwert der Härte der Stützschicht 3 nicht in einer randständigen Teilschicht 16 ausgebildet ist, sondern in einer anderen der Teilschichten 16 bis 19, insbesondere der an die Teilschicht 16 unmittelbar anschließende Teilschicht 17, wobei jedoch darauf zu achten ist, dass in Richtung auf die weitere Schicht 4 der Härtegradient ausgebildet ist, sodass also bevorzugt der Maximalwert der Härte der Stützschicht 3 nicht in der Teilschicht 19 ausgebildet ist, an die die weitere Schicht 4 anschließt. Mit bevorzugt ist dabei gemeint, dass es möglich ist, dass der Härtegradient auch nur innerhalb der Teilschicht 19 ausgebildet ist, wenngleich dies aufgrund der geringeren Schichtdicke der Teilschicht 19 verglichen mit der Schichtdicke 9 der Stützschicht 3 nicht bevorzugt ist, da damit der Härtegradient mit deutlich steilerem Verlauf ausgebildet ist.

Die Ausbildung des Härtegradients in der Stützschicht 3 kann rein durch thermische Behandlung der Stützschicht 3 bzw. des Vormaterials, aus dem die Stützschicht 3 gebildet wird, erfolgen. Nach einer anderen Ausführungsvariante des Gleitelements 1 kann alternativ oder zusätzlich dazu jedoch vorgesehen sein, dass die Stützschicht 3 eine härtendes Element aufweist, für das innerhalb der Stützschicht zwischen der ersten und der zweiten Oberfläche 10, 11 ein Konzentrationsgradient ausgebildet ist.

Beispielsweise kann dieses härtende Element ausgewählt ist aus einer Gruppe umfassend Kohlenstoff, Stickstoff, Molybdän, Wolfram, Chrom, Nickel, Phosphor, oder eine Kombination daraus. Es ist also im Rahmen der Erfindung möglich, dass die Oberfläche der Stützschicht 3, die der die weitere Schicht 4 aufweisende Oberfläche in Richtung der Schichtdicke 9 gegenüberliegt, karburiert oder nitriert oder karbonitriert wird. Diese Verfahren an sich (Karburierung, Nitrierung, Karbonitrierung) sind bekannt, sodass zu weiteren Details der Verfahrensparameter auf den einschlägigen Stand der Technik dazu verwiesen sei.

Wie bereits erwähnt, kann der Härtegradient neben dem Einsatz von unterschiedlich harten Werkstoffen für die Teilschichten 16 bis 19 bzw. der Ausbildung von Konzentrationsgradienten für Bestandteile der Stützschicht 3 auch (ausschließlich) thermisch ausgebildet werden. Dazu kann vorgesehene sein, dass die Stützschicht 3 an der Oberfläche, an der die weitere Schicht 4 angeordnet wird, erwärmt wird. Beispielsweise kann die Erwärmung auf eine Temperatur zwischen 450 °C und 950 °C für eine Zeitdauer zwischen 0,5 Minuten und 5 Minuten erfolgen. Bei dieser Verfahrensvariante wird also nicht die gesamte Stützschicht 3 gleichmäßig durcherwärmt, sondern nur ein Teil davon. Die Erwärmung erfolgt insbesondere in einem Bereich zwischen 10 % und 80 %, vorzugsweise zwischen 20 % und 60 %, der Schichtdicke 9 der Stützschicht 3, beginnend an der Oberfläche, an der die weitere Schicht 4 angeordnet wird.

Die thermische Behandlung der Stützschicht 3 kann vor oder mit der Anordnung der weiteren Schicht 4 auf der Stützschicht 3 erfolgen.

Prinzipiell kann die Erwärmung mit jeder geeigneten Wärmequelle durchgeführt werden. Vorzugsweise wird sie in einer Banderwärmungsanlage durchgeführt. Besonders bevorzugt wird die Erwärmung induktiv durchgeführt. Mit dieser Ausführungsvariante des Verfahrens kann der Bereich der Erwärmung über die Frequenz bzw. die Leistung der induktiven Behandlung eingestellt werden.

Um innerhalb der Stützschicht 3 größeres Temperaturgefälle auszubilden bzw. um mit höherer Sicherheit ein Erwärmung der nicht zu erwärmenden Bereiche zu verhindern bzw. um einen gewünschten Härtegradienten besser durch Anwendung eines Temperaturgradienten einstellen zu können, kann dabei vorgesehen werden, dass die Oberfläche der Stützschicht 3, die der Oberfläche gegenüberliegt, auf der die weitere Schicht 4 angeordnet wird, gekühlt wird. Zur Kühlung kann beispielsweise Wasser oder ein Thermoöl oder eine Kühlemulsion, etc., verwendet werden. Die Kühlung kann dabei direkt durch die Beaufschlagung der Oberfläche mit dem Kühlmittel oder indirekt durch Kühlung der Auflagefläche, auf der die Stützschicht 3 bzw. das Vormaterial bei der thermischen Behandlung aufliegt, erfolgen. Vorzugsweise wird dabei ein Temperaturgradient zwischen 150 °C/mm bis 400 °C/mm, bezogen auf die gesamte Schichtdicke der Stützschicht 3, eingestellt.

Nach einer weiteren Ausführungsvariante der Erfindung kann vorgesehen sein, dass auch in der weiteren Schicht 4, die beispielsweise als Lagermetallschicht 5 ausgebildet ist, bzw. generell in einem Gleitlagerelement 1 nach der Erfindung mit einer Lagermetallschicht 5, ein Härtegradient in horizontal Richtung ausgebildet wird. Dabei kann vorgesehen sein, dass die Ränder bzw. Randbereiche weicher sind als eine Mitte bzw. ein Mittenbereich. Dies kann beispielswiese durch induktives Erweichen der Lagermetallschicht 5 am Rand erreicht werden. Es kann damit eine Verbesserung der Anpassungsfähigkeit der Lagermetallschicht 5 bzw. der weiteren Schicht 4 erreicht werden.

Wie bereits voranstehend erwähnt, besteht im Rahmen der Erfindung auch die Möglichkeit, dass die Härte der Stützschicht 3 (in radialer Richtung) nicht bereits in der Randzone 12 beginnt abzunehmen, sondern erst innerhalb der der Stützschicht 3 in einer der Zwischenzonen 13 bis 14, und dass der größte Härteabfall in der Bindezone 15 erfolgt. Ein derartiger Verlauf des Härtegradienten ist in Fig. 4 dargestellt. Gezeigt sind sieben Kombinationen aus jeweils einer Stahl-Stützschicht 3 und einer weiteren Schicht 4 aus einer Aluminiumbasislegierung. Dabei ist auf der Abszisse der Abstand von der zweiten Oberfläche 11 der Stützschicht in [mm] und auf der Ordinate die Härte nach Vickers HV 1 gemäß DIN EN ISO 6507-1:2018 aufgetragen.

In folgender Tabelle 1 sind die Härtewerte der ausgebildeten Gradienten wiedergegeben, wobei pro Zeile die Werte für einen der ausgebildeten Härtegradienten einer der sieben Proben stehen.

**Tabelle 1:**

| Stahl Stützschicht 3 | | | | | | | | | | Schicht 4 | | | |
|---|---|---|---|---|---|---|---|---|---|---|---|---|---|
| 250 | 250 | 250 | 250 | 250 | 204 | 230 | 220 | 210 | 200 | 100 | 97,5 | 95 | 92,5 |
| 210 | 205 | 200 | 195 | 190 | 160 | 155 | 155 | 155 | 155 | 100 | 97,5 | 95 | 92,5 |
| 230 | 230 | 230 | 225 | 215 | 165 | 170 | 175 | 180 | 180 | 100 | 97,5 | 95 | 92,5 |
| 200 | 190 | 180 | 170 | 160 | 150 | 150 | 155 | 157,5 | 160 | 100 | 97,5 | 95 | 92,5 |
| 220 | 215 | 205 | 190 | 180 | 175 | 170 | 165 | 160 | 155 | 130 | 120 | 95 | 92,5 |
| 240 | 240 | 240 | 235 | 225 | 210 | 195 | 175 | 160 | 175 | 100 | 97,5 | 95 | 92,5 |
| 160 | 160 | 157 | 154 | 150 | 145 | 136 | 126 | 116 | 106 | 100 | 97,5 | 95 | 92,5 |

Durch die Ausbildung einer verringerten Härte in der Stützschicht 3 an Bindezone 15 konnte bei den Ausführungsbeispielen nach der Erfindung eine dauerhaftere Bindefestigkeit zwischen der Stützschicht 3 und der weiteren Schicht 4 erreicht werden.

Wie anhand der Tabelle 1 ersichtlich ist, besteht im Rahmen der Erfindung generell die Möglichkeit, dass auch in der weiteren Schicht 4 ein Härtegradient ausgebildet ist bzw. wird, wobei die Härte bevorzugt in der an die Bindezone 15 der Stützschicht 3 anschließenden Oberfläche am größten ist.

Die Ausführungsbeispiele zeigen bzw. beschreiben mögliche Ausführungsvarianten, wobei auch Kombinationen der einzelnen Ausführungsvarianten untereinander möglich sind.

Der Ordnung halber sei abschließend darauf hingewiesen, dass zum besseren Verständnis des Aufbaus die Darstellungen in den Fig. 1 bis 3 nicht zwingenderweise maßstäblich sind.

### Bezugszeichenaufstellung

- 1: Gleitlagerelement
- 2: Lagerelementkörper
- 3: Stützschicht
- 4: Schicht
- 5: Lagermetallschicht
- 6: Einlaufschicht
- 7: Gleitlagerelement
- 8: Gleitlager
- 9: Schichtdicke
- 10: Oberfläche
- 11: Oberfläche
- 12: Randzone
- 13: Zwischenzone
- 14: Zwischenzone
- 15: Bindezone
- 16: Teilschicht
- 17: Teilschicht
- 18: Teilschicht
- 19: Teilschicht

## Patentansprüche

1. Gleitlagerelement (1) umfassend einen mehrschichtigen Lagerelementkörper (2), der eine Stützschicht (3) und zumindest eine weitere Schicht (4) aufweist, wobei die Stützschicht (3) eine Schichtdicke (9), eine erste Oberfläche (10) und eine zweite Oberfläche (11), die der ersten Oberfläche (10) in Richtung der Schichtdicke (9) der Stützschicht (3) gegenüberliegt, aufweist und die weitere Schicht (4) entweder auf der ersten Oberfläche (10) oder auf der zweiten Oberfläche (11) angeordnet ist, **dadurch gekennzeichnet, dass** in der Stützschicht (3) ein Härtegradient mit in Richtung auf die weitere Schicht (4) abnehmender Härte ausgebildet ist.

2. Gleitlagerelement (1) nach Anspruch 1, **dadurch gekennzeichnet, dass** der Minimalwert der Härte der Stützschicht (3) um zumindest 25 % des Maximalwertes der Härte der Stützschicht (3) kleiner ist.

3. Gleitlagerelement (1) nach Anspruch 1 oder 2, **dadurch gekennzeichnet, dass** die Härte der Stützschicht (3) an der Oberfläche (10), an der die weitere Schicht (4) angeordnet ist, um maximal 400 % höher ist, als eine Härte der weiteren Schicht (4), die die weitere Schicht (4) an der Oberfläche aufweist, die der Stützschicht (3) zugewandt ist.

4. Gleitlagerelement (1) nach einem der Ansprüche 1 bis 3, **dadurch gekennzeichnet, dass** die Stützschicht (3) aus einem Stahl besteht.

5. Gleitlagerelement (1) nach einem der Ansprüche Anspruch 1 bis 4, **dadurch gekennzeichnet, dass** die Stützschicht (3) einschichtig ausgebildet ist.

6. Gleitlagerelement (1) nach einem der Ansprüche Anspruch 1 bis 4, **dadurch gekennzeichnet, dass** die Stützschicht (3) mehrere Teilschichten (16 bis 19) aufweist, wobei innerhalb der Teilschichten (16 bis 19) die Härte gleichbleibend ist.

7. Gleitlagerelement (1) nach Anspruch 6, **dadurch gekennzeichnet, dass** mehrere oder alle Teilschichten (16 bis 19) aus metallischen Legierungen mit jeweils dem gleichen Basiselement bestehen.

8. Gleitlagerelement (1) nach Anspruch 6 oder 7, **dadurch gekennzeichnet, dass** mehrere oder alle Teilschichten (16 bis 19) aus einem Stahl bestehen.

9. Gleitlagerelement (1) nach einem der Ansprüche 1 bis 8, **dadurch gekennzeichnet, dass** die Stützschicht (3) eine härtendes Element aufweist, für das innerhalb der Stützschicht (3) zwischen der ersten und der zweiten Oberfläche (10, 11) ein Konzentrationsgradient ausgebildet ist.

10. Gleitlagerelement (1) nach Anspruch 9, **dadurch gekennzeichnet, dass** das härtende Element ausgewählt ist aus einer Gruppe umfassend Kohlenstoff, Stickstoff, Molybdän, Wolfram, Chrom, Nickel, Phosphor, oder eine Kombination daraus.

11. Verfahren zur Herstellung eines Gleitlagerelements (1) umfassend einen mehrschichtigen Lagerelementkörper (2), der aus einer Stützschicht (3) und zumindest einer weiteren Schicht (4) hergestellt wird, wobei die Stützschicht (3) eine Schichtdicke (9), eine erste Oberfläche (10) und eine zweite Oberfläche (11), die der ersten Oberfläche (10) in Richtung der Schichtdicke (9) der Stützschicht (3) gegenüberliegt, aufweist und die weitere Schicht (4) entweder auf der ersten Oberfläche (10) oder auf der zweiten Oberfläche (11) angeordnet wird, **dadurch gekennzeichnet, dass** in der Stützschicht (3) ein Härtegradient mit in Richtung auf die weitere Schicht (4) abnehmender Härte ausgebildet wird.

12. Verfahren nach Anspruch 11, **dadurch gekennzeichnet, dass** zur Ausbildung des Härtegradients die Stützschicht (3) an der Oberfläche (10), an der die weitere Schicht (4) angeordnet wird, erwärmt wird.

13. Verfahren nach Anspruch 11 oder 12, **dadurch gekennzeichnet, dass** die Erwärmung der Stützschicht (3) induktiv durchgeführt wird.

14. Verfahren nach einem der Ansprüche 11 bis 13, **dadurch gekennzeichnet, dass** die Oberfläche (11) der Stützschicht (3), die der Oberfläche (10) gegenüberliegt, auf der die weitere Schicht (3) angeordnet wird, gekühlt wird.

15. Verfahren nach einem der Ansprüche 11 bis 14, **dadurch gekennzeichnet, dass** Stützschicht (3) an der Oberfläche (11), die der Oberfläche (10) gegenüberliegt, auf der die weitere Schicht (4) angeordnet wird, karburiert oder nitriert oder karbonitriert wird.
